# EUROPEAN PATENT SPECIFICATION

(11) **EP 0 649 691 B1**
(45) Date of publication and mention of the grant of the patent: **28.11.2001**
(21) Application number: 94114945.2
(22) Date of filing: 22.09.1994
(51) Int. Cl.: B22C 7/02, B22C 9/04

(54) **Method for fabrication of an investment pattern**
Verfahren zur Herstellung eines Feingussmodells
Procédé de production d'un modèle pour moulage de précision

(30) Priority: 24.09.1993 US 126272
(43) Date of publication of application: 26.04.1995
(73) Proprietor: TEXAS INSTRUMENTS INCORPORATED, Dallas Texas 75265 (US)
(72) Inventor: Penn, Steven M., Plano, TX 75025 (US); Wright, Tommy D., Irving, TX 75060 (US)
(74) Representative: Schwepfinger, Karl-Heinz, Dipl.-Ing.

(56) References cited:
- EP-A- 0 429 196
- WO-A-90/01727
- J. BISSCHOP ET AL. 'stereolithografie' , KUNSTSTOF EN RUBBER 45 (1992) FEBRUARY, NO. 2, P. 11-18 , ROTTERDAM, NE * page 14, right column, paragraph 4 - page 15, left column, paragraph 1; figures 9A-C *

## Description

### Technical Field of the Invention

The present invention relates to investment casting techniques, and more particularly, to an investment pattern adapted to be used in the production of castings and to a method for fabrication of castings.

### Background of the Invention

The casting industry has long used heat-disposable solid patterns in the making of metal objects. The process of investment casting is historically known as the "lost wax" process. This process is performed by supplying a wax pattern of the item to be cast. A geometric cavity results after the solid pattern is encapsulated in ceramic and then removed by melting of the wax of the pattern. The cavity is filled with metal or other casting material which then takes the exact shape of the original pattern. Other pattern materials have been tried such as wood, foam, and plastic, but these types of pattern materials are more difficult to remove by heating than the wax. A requirement of any casting method is that the ceramic encapsulant or mold remains intact without cracking during the pattern melt or burn-out.

Stereolithography, or rapid prototyping, enables construction of plastic patterns in a short time period and without tooling. The stereolithography patterns are made of polymer which is solidified on the exterior of the pattern by scanning a UV (ultraviolet) laser according to a three dimensional data in a computer database. The pattern is produced one layer at a time by the laser. The polymer remains liquid in the interior of the pattern until the pattern is further cured, for example by curing the pattern in a UV oven. Solid patterns produced in this manner have been used in the casting process with great difficulty, primarily due to the high burn-out temperatures of resin and high thermal expansion of the pattern. The ceramic shell typically cracks or breaks as stereolithography patterns expand outward during the burn-out phase. The cracking or breaking is a result of weak or incomplete portion of the pattern being produced one layer at a time. This cracking or breaking normally occurs at the position where two layers are joined together. In addition, the polymer does not burn cleanly or completely, leaving the end product casting contaminated or of low quality due to the ash of the burned polymer.

WO-A-9001727 discloses an investment pattern as mentioned in the beginning. The pattern is a cross-linked polymeric matrix of a radiation-cured ethylenically unsaturated material having distributed throughout a thermoplastic, low molecular weight material, which is present in an amount effective to prevent the pattern from cracking or distorting a mold during a heating step. This document also describes a method of forming a mold comprising the steps of investing a pattern in a refractory material and heating the refractory material and the pattern to produce the mold. It is further mentioned in this document that investing the pattern may comprise building-up a refractory material, e.g., an aqueous ceramic slurry, around the pattern, and that the pattern may be coated with successive layers of refractory material, each layer being coated with fine ceramic sand and dried before the next layer is applied.

### Summary of the Invention

The hollow patterns generated with this invention are compatible with existing casting techniques. During the burn-out process, the pattern's skin is evacuated at temperature, for example from 200°F to 800°F. The polymer shell is then able to collapse toward the pattern interior as thermal stresses increase. This collapsing toward the interior of the pattern results in less outward expansion of the pattern, and the ceramic shell is undamaged. Polymer burn-out is then successfully completed (at approximately, for example 650°C) without damage to the ceramic mold and with minimal residual ash.

In the present invention, a stereolithography machine manufactured by 3D Systems, Inc. or any other lazer/polymer rapid prototype machine, is used to solidify a pattern including a series of stacked grids of varying cross section that forms a pattern having an outer skin and inner labyrinth and any number of gates. The labyrinth or grid allows the unsolidified polymer to drain completely from the inside of the pattern via the gates, resulting in a pattern that is not solid polymer. The resulting three dimensional pattern provides the contiguous surface geometry adequately supported by an interior framework.

The pattern is completed by attaching the gates of the pattern to a runner which is attached to a central sprue. Several of these patterns are so attached via the runner to the central sprue to form a pattern cluster. The pattern cluster is subsequently dipped in ceramic slurry, and the patterns of the pattern cluster are sifted by refractory grain to form a shell layer. These two steps are repeated to form a plurality of shell layers. The mold material is dried, and the patterns are melted out of the mold; the mold is cooled, and carbon and trash found within the mold if found, can be flushed with air and water. The molds are heated and filled with liquid metal, the filling being aided by either gravity, pressure/vacuum or centrifugal force. The mold is broken away from the castings, and the castings are removed from the sprue; gate stubs are ground off to achieve a finished product.

The present invention can be used in conjunction with existing polymer methods. The production of the hollow pattern is achieved in half of the amount of time as previously required. The present invention can be easily integrated with existing processes employed by shell foundries. The present invention produces the pattern molds at less cost than previous pattern molds.

According to one aspect of the present invention, there is provided a method for fabrication of castings comprising the steps defined in claim 1.

According to a second aspect of the present invention, there is provided an investment pattern comprising the features of the characterizing portion of claim 4.

These and other features of the invention that will be apparent to those skilled in the art from the following detailed description of the invention, taken together with the accompanying drawings.

### Description of the Drawings

Fig. 1 is an illustration depicting grid forms that are stacked to provide a pattern;
Fig. 2 is an isometric drawing illustrating a typical pattern resulting from stacking grids such as those illustrated in Figure 1;
Figs. 3a and 3b illustrate various steps in the process to produce an investment of the present invention; and
Figs. 4a-4h illustrate various steps in the process to produce a casting of the present invention.

### Detailed Description of the Invention

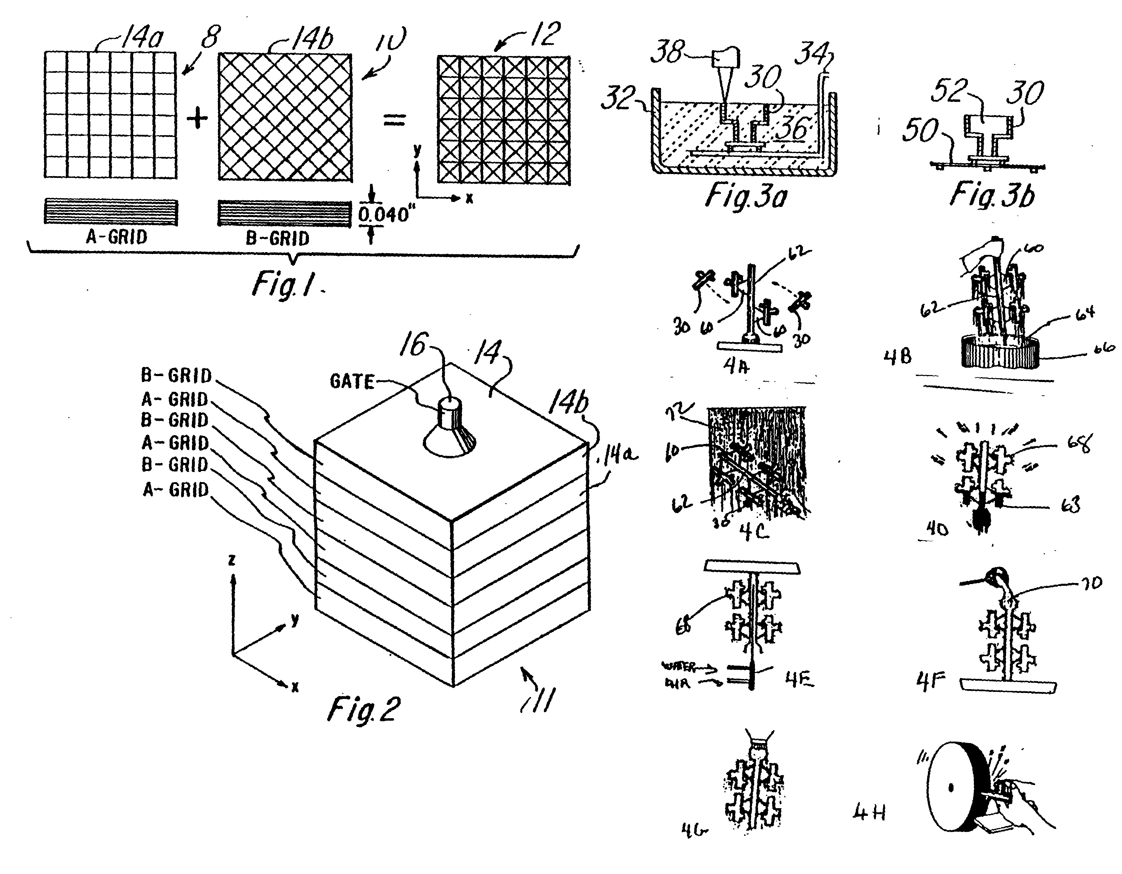

The present invention uses a stereolithography machine manufactured by 3D Systems, Inc. or other lazer/polymer rapid prototype machine to solidify a pattern comprising a series of stacked A-grids having a first predetermined cross section 8 and B-grids 10 having a second predetermined cross section such as those illustrated in Figure 1. When grids 8 and 10 are stacked one on top of the other to form a pattern 11, which is a combination of the first and second predetermined cross section, a labyrinth 12 results as illustrated in Figure 1. Each of the A and B grids have elements that couple sides of the grids. The element of A-grid and an element of B-grid form, for example substantially a 45°, angle or any other angle will achieve satisfactory results. Figure 2 illustrates pattern 11 having an outer skin 14 and an inner labyrinth 12 (see Figure 1) and a gate 16 such that the outer skin 14 includes A-outer skin 14a and B-outer skin 14b. Labyrinth 12 allows any unsolidified polymer to drain completely from the inside of pattern 11 via gate 16. Gate 16 also operates as a vent for the filling process. In the preferred embodiment, one or more drains and one or more vents are recommended. The preferred embodiment is illustrated as having one gate for simplification, however, any number of gates, drains and vents may be provided. The resulting pattern 11 of three dimensions provides an essential contiguous surface geometry adequately supported by an interior framework.

Referring now to Figures 3a and 3b, the various steps of the process of the present invention are illustrated. In Figure 3a, investment 30 is completed by curing the x-y cross sections of the polymer by using an ultraviolet light source. Layers of A-grid and B-grid are constructed in sequential manner as platform 34 is lowered into vessel 32. Investment 30 is completed by placing it within vessel 32 through the use of lowering platform 34. Vessel 32 is filled with an ultraviolet curable liquid 36. Investment 30 is formed by ultraviolet light source 38 which is moveable in the x-y directions, curing the ultraviolet curable liquid 36. This process may be completed by any method currently known in the art, such as stereolithography.

In Figure 3b, investment 30 is placed on platform 50, which is oriented for maximum drainage of remaining resin 52 of ultraviolet curable liquid 36 from within investment 30. The drainage of the remaining resin 52 is facilitated by the labyrinth 12. Several orientations of the investment 30 may be required depending on the placement of a riser or gate 16. Investment 30 may be drained inside a heated chamber (not shown) to take advantage of the elevated temperature. Use of low viscosity resins as the ultraviolet curable liquid is preferred but not required. Investment 30 may be rinsed thoroughly, for example, in IPA, making sure that remaining ultraviolet curable liquid 52 is not trapped in corners or pockets within investment 30. Investment 30 can be soaked in, for example, clean IPA for several hours if required. Preferably, investment 30 should not be exposed to ultrasonic cleaning for more than ten minutes. Any ultraviolet curable liquid 36 on the exterior should be removed from the exterior, for example by wiping the exterior of investment 30. Then, in the preferred embodiment, investment 30 may be allowed to dry, for example for approximately one hour and wiped again. Investment 30 is preferably not soaked in alcohol after the last drying cycle, or the skin may stretch and split on removal. After drying, investment 30 is cured in an ultraviolet oven (not shown) for one and a half minutes at full power. The short postcure of the oven will assure a nonporous skin without warpage. Investment 30 is wiped again if any ultraviolet curable liquid 36 remains on the exterior of investment 30.

Referring to Fig. 4a, the investments 30 are mounted at gate 16 to runner 60, which is coupled to central sprue 62. A plurality of similar investments 30 are mounted to other runners 60, which are all coupled to central sprue 62.

Referring to Fig. 4b, ceramic slurry 64 is prepared in tank 66. The investments 30 are dipped or immersed in the ceramic slurry 64 so that all the investments 30 are completely covered by ceramic slurry 64. Although, the dipping of the investments 30 may be accomplished by various methods, for example by automatic machine, or Fig. 4b illustrates that the investments 30 are dipped by the hand of an operator. The investments 30 may be agitated by rotating and elevating investments 30 so as to completely cover investments 30 with ceramic slurry 64.

As illustrated in Fig. 4c, investments 30 are sifted through refractory grain 72 to produce a layer of refractory grain 72 on the exterior surface of the ceramic slurry coated investments 30. The central sprue 60 is positioned for the sifting refractory grain 72, for example, by hand to achieve a uniform coating of refractory grain 72. The central sprue 60 may be rotated to ensure that refractory grain 72 is uniformly coated on investment 30.

Multiple layers of refractory grain 72 are desired to assure a complete and relatively thick coating and achieved by repeating the above dipping step illustrated in Fig. 4b and then by sifting investments 30 in refractory grain 72. In the preferred embodiment, at least nine shell layers are obtained by repeating the dipping and sifting steps illustrated in 4b and 4c, respectively. However, additional layers could be formed in a similar manner.

Referring to Fig. 4d, the mold material formed from the shell layers is set and dried. Subsequently, heat is applied to the mold and investment 30 in order to melt the investment from the mold. Referring to Fig. 4e, molds 68 are, for example, inverted and a supply of water and a supply of air are independently coupled to central sprue 62 so that the water and air may enter central sprue 62, runners 60, and the interior of molds 68 in order to flush molds 68 to remove carbon and other trash. The flushing step may be eliminated if the carbon or other trash is not present. The source of water and the source of air are removed from central sprue 62, and molds 68 are positioned upright to prepare for the reception of heated metal.

Referring to Fig. 4f, molds 68 are heated, and hot molds 68 are filled with hot metal through the central sprue 62 and runner 60. A filling of the hot metal is facilitated, for example by gravity, pressure/vacuum or centrifugal force to remove any trapped bubbles, obtaining an accurate casting from the mold 68. The material of mold 68 is broken away from the casting as illustrated in Fig. 4g. Subsequently, the castings are removed from the central sprue 62. And as illustrated in Fig. 4h, the solidified metal corresponding to the gate 16 of the investment is removed, for example by grinding.

One unique quality of the hollow investments 30 is that the expansion of the investments 30 while heating the investment does not crack mold 68 since the hollow investments 30 expand both inwardly and outwardly, reducing the outward expansion of investment 30.

The operation of the present investment follows:

The ultraviolet light source 38 forms investment 30 on platform 35 positioned in vessel 32 by reacting with the ultraviolet curable liquid 36. The investment 30 is drained of the remaining ultraviolet curable liquid 36. The investment 30 is dried and cured in an ultraviolet oven.

The investment 30 is mounted on runner 60, which is coupled to central sprue 62. The central sprue 62 including the investments 30 is dipped in a ceramic slurry. The ceramic slurry coated investments 30 are sifted by refractory grains to provide a plurality of layers. The investments 30 are heated while attached to runners 60, and investment 30 is melted out, forming a mold. An air and a water supply are coupled to central sprue 62 in order to supply the interior of the mold with the air and water in order to remove carbon and other trash, purifying the interior of the molds. The molds are heated, and hot metal fills the molds. An accurate casting is achieved by gravity, pressure/vacuum or centrifugal force. The mold material is broken away from the castings and the gate stubs which correspond to gate 16 are removed, for example by grinding, from the castings.

The investment is computer and machine generated, which significantly reduces the manual labor and the cycle time for the fabrication of the casting and provides a high degree of part accuracy. The hollow investment 30 is stable, while enabling consistent burn-out and low ash content. The shell and labyrinth also enables the use of a variety of polymer formulations which may present other benefits such as cost, green strength and safety.

This process generates casting or mold patterns with highly accurate internal and external details in comparison with other wax coating techniques. This is a result of the CAD defined polymer exterior and hollow investment. This new process provides patterns which are compatible with industry accepted casting processes and equipment.

## Claims

1. A method for fabrication of castings comprising the steps of:
forming an investment pattern (11, 30) having an outer skin (14), a fill riser (16) and an inner labyrinth (12) by
positioning a first grid (8) to form a first portion of said pattern (11, 30), said grid (8) having a first cross section;
positioning a second grid (10) to form a second portion of said pattern (11, 30), said grid (10) having a second cross section;
arranging said first and said second grid (8, 10) so that said second cross section is not aligned with said first cross section;
draining said inner labyrinth (12) of ultraviolet curable material; and
curing said investment pattern (11, 30) in an ultraviolet oven;
positioning said investment pattern (11, 30) on a support (62);
coating said investment pattern (11, 30) in a coating solution (64);
sifting said coated investment pattern (11, 30) with a refractory medium (72) to form a mold (68);
removing said investment pattern (11, 30);
filling said mold (68) with casting material in order to form a casting; and
removing said mold (68) to release said casting.

2. The method of claim 1, further comprising the step of flushing said mold (68).

3. The method of claim 2, further comprising flushing said mold (68) with air and water.

4. An investment pattern adapted to be used in the production of castings, said investment pattern (11, 30) being **characterized by**
a first grid (8) forming a portion of said investment pattern (11, 30), said first grid (8) having a first cross section;
a second grid (10) forming a portion of said investment pattern (11, 30), said second grid (10) having a second cross section;
a gate (16) to drain said investment pattern (11, 30), said first grid (8) and said second grid (10) being positioned adjacent so that liquid ultraviolet curable solution flows through said gate (16).

5. An investment pattern as in claim 4, wherein each of said grids (8, 10) comprises at least two elements coupling at least two sides of each of said grids.

6. An investment pattern as in claim 5, wherein each of said at least two elements are substantially perpendicular to the other of said at least two elements.

7. An investment pattern as in claim 6, wherein a first element of said first grid (8) and a second element of said second grid (10) form an angle of substantially 45°.

## Patentansprüche

1. Verfahren zum Herstellen von Gußteilen, das die folgenden Schritte umfaßt:
Bilden eines Formmusters (11, 30), das eine Außenhaut (14), eine Befüllungssteigleitung (16) und ein inneres Labyrinth (12) besitzt, durch
Positionieren eines ersten Gitters (8), um einen ersten Abschnitt des Musters (11, 30) zu bilden, wobei das Gitter (8) einen ersten Querschnitt besitzt;
Positionieren eines zweiten Gitters (10), um einen zweiten Abschnitt des Musters (11, 30) zu bilden, wobei das Gitter (10) einen zweiten Querschnitt besitzt;
Anordnen des ersten und des zweiten Gitters (8, 10) in der Weise, daß der zweite Querschnitt nicht auf den ersten Querschnitt ausgerichtet ist;
Entleeren des inneren Labyrinths (12) von durch UV-Strahlung härtbarem Material; und
Härten des Formmusters (11, 30) in einem UV-Strahlungsofen;
Positionieren des Formmusters (11, 30) auf einem Träger (62);
Beschichten des Formmusters (11, 30) in einer Beschichtungslösung (64);
Siebwaschen des beschichteten Formmusters (11, 30) mit einem feuerfesten Medium (72), um eine Gießform (68) zu bilden;
Entnehmen des Formmusters (11, 30);
Befüllen der Gießform (68) mit Gießwerkstoff, um ein Gußteil zu bilden; und
Abnehmen der Gießform (68), um das Gußteil freizugeben.

2. Verfahren nach Anspruch 1, das ferner den Schritt des Spülens der Gießform (68) umfaßt.

3. Verfahren nach Anspruch 2, das ferner das Spülen der Gießform (68) mit Luft und Wasser umfaßt.

4. Formmuster, das so beschaffen ist, daß es bei der Herstellung von Gußteilen verwendet wird, wobei das Formmuster (11, 30) **gekennzeichnet ist durch**
ein erstes Gitter (8), das einen Abschnitt des Formmusters (11, 30) bildet und einen ersten Querschnitt besitzt;
ein zweites Gitter (10), das einen Abschnitt des Formmusters (11, 30) bildet und einen zweiten Querschnitt besitzt;
einen Einlauf (16), um das Formmuster (11, 30), das erste Gitter (8) und das zweite Gitter (10), die nebeneinander angeordnet sind, zu entleeren, derart, daß die flüssige, ultravioletthärtbare Lösung **durch** den Einlauf (16) fließt.

5. Formmuster nach Anspruch 4, bei dem jedes der Gitter (8, 10) wenigstens zwei Elemente umfaßt, die wenigstens zwei Seiten jedes der Gitter miteinander koppeln.

6. Formmuster nach Anspruch 5, bei dem jedes der wenigstens zwei Elemente zu dem anderen der wenigstens zwei Elemente im wesentlichen senkrecht verläuft.

7. Formmuster nach Anspruch 6, bei dem ein erstes Element des ersten Gitters (8) und ein zweites Element des zweiten Gitters (10) einen Winkel von im wesentlichen 45° bilden.

## Revendications

1. Procédé pour fabriquer des pièces coulées comprenant les étapes consistant à:
former un modèle de précision (11, 30) possédant une peau extérieure (14), une masselotte de remplissage (16) et un labyrinthe intérieur (12) par
positionnement d'une première grille (8) pour former une première partie dudit modèle (11, 30), ladite grille (8) possédant une première section transversale;
positionnement d'une seconde grille (10) pour former une seconde partie dudit modèle (11, 30), ladite grille (10) possédant une seconde section transversale;
mise en place desdites première et seconde grilles (8, 10) de telle sorte que ladite seconde section transversale n'est pas alignée avec ladite première section transversale;
drainage dudit labyrinthe intérieur (12) par un matériau durcissable sous l'action des ultraviolets ; et
durcissement dudit modèle de précision (11, 30) dans un four à ultraviolets;
placer ledit modèle de précision (11, 30) sur un support (62);
recouvrir ledit modèle de précision (11, 30) avec une solution de revêtement (64);
cribler ledit modèle de précision recouvert (11, 30) avec un milieu réfractaire (72) pour former un moule (68),
retirer ledit modèle de précision (11, 30);
remplir ledit moule (68) par un matériau de coulée pour former une pièce coulée; et
retirer ledit moule (68) pour libérer ladite pièce coulée.

2. Procédé selon la revendication 1, comprenant en outre l'étape consistant à rincer ledit moule (68).

3. Procédé selon la revendication 2, comprenant en outre un rinçage dudit moule (68) avec de l'air et de l'eau.

4. Modèle de précision apte à être utilisé dans la fabrication de pièces coulées, ledit modèle de précision (11, 30) étant **caractérisé par**
une première grille (8) formant une partie dudit modèle de précision (11, 30), ladite première grille (8) possédant une première section transversale;
une seconde grille (10) formant une partie dudit modèle de précision (11, 30), ladite seconde grille (10) possédant une seconde section transversale;
une attaque de coulée (16) pour purger ledit moule de précision (11, 30), ladite première grille (8) et ladite seconde grille (10) étant disposées dans des positions adjacentes de sorte qu'une solution liquide durcissable sous l'action des ultraviolets circule dans ladite attaque de coulée (16).

5. Modèle de précision selon la revendication 4, dans lequel chacune desdites grilles (8, 10) comprend au moins deux éléments couplant au moins deux côtés de chacune desdites grilles.

6. Modèle de précision selon la revendication 5, dans lequel chacun desdits au moins deux éléments est sensiblement perpendiculaire à l'autre desdits au moins deux éléments.

7. Modèle de précision selon la revendication 6, dans lequel un premier élément de ladite première grille (8) et un second élément de ladite seconde grille (10) font un angle égal sensiblement à 45°.
